# EUROPEAN PATENT APPLICATION

(11) **EP 3 640 482 A1**
(43) Date of publication of application: **22.04.2020**
(21) Application number: 18213642.4
(22) Date of filing: 18.12.2018
(51) Int. Cl.: F16B 2/24, F16B 5/06, F16B 19/06, F16B 21/07, A44B 17/00

(54) **FOUR-PIECE SNAP FASTENER**

(30) Priority: 16.10.2018 CN 201821677508 U
(71) Applicant: Golden Button Industrial Co.,Ltd (SN&BETS), 201315 Shanghai (CN)
(72) Inventor: Zhang, Qing Bo, Shanghai, 201315 (CN)
(74) Representative: 2K Patentanwälte Blasberg Kewitz & Reichel

(57) **Abstract**

A four-piece snap fastener comprises a male fastener (1) and a female fastener (2). The male fastener (1) is composed of a first cap (3) and a stud (4). The female fastener (2) is composed of a second cap (5) and a socket (6). The first cap (3) and the second cap (5) each have a pin (7) at a central portion thereof. The stud (4) and the socket (6) each have a recess (8) at a central portion of a rear side thereof. The pin (7) is fixedly connected to the recess (8). The pin (7) is a solid metal pin. The solid metal pin has a pointed end (10) that is fixedly connected to the recess (8). The pin (7) is fixedly connected to the recess (8) by splaying and riveting the pointed end (10). Through the recess (8) provided at the central portion of the rear side of the stud (4) and the socket (6), the pin (7) is fixedly connected to the recess (8) by splaying and riveting the pointed end. The wear on the fabric caused by the four-piece snap fastener can be reduced when the pointed end (10) of the pin (7) pierces through the fabric and extends into the recess (8).

## Description

The present invention relates to clothing accessories, and more particularly to a high-strength four-piece snap fastener that is easy to operate.

### BACKGROUND OF THE INVENTION

A four-piece snap fastener is a commonly used connecting member for connecting two lappets together, and mainly functions as a snap-fit connection. A four-piece snap fastener is composed of a first cap, a stud, a socket and a second cap that are arranged in sequence from top to bottom. The second cap and the socket form a female fastener. The center of the female fastener is formed with a trough. The side of the trough is provided with a snap ring. The stud and the first cap form a male fastener. The center of the male fastener is formed with a head. The head is pressed into the trough of the female fastener and clamped tightly by the snap ring to realize the connection.

Chinese Utility Model application No. CN201820192038.7 discloses a novel four-piece snap fastener with high strength and without opening. Through a solid metal pin, the components of the four-piece snap fastener are assembled by splaying and riveting the metal pin with a mold, instead of a hollow copper tube that is riveted by hemming with a mold. The novel four-piece snap fastener has a high-strength perforating function. There is no need for preset perforations on the fabric. The splay and the riveting manner of the solid pin have a stronger fastening effect. The operation is convenient. However, in the prior art, due to the limiting hole formed at the center of the socket and the stud, when the solid metal pin pierces through the fabric and the limiting hole, the fabric is easily brought into the limiting hole. As a result, the perforation of the fabric produces burrs, which increases the wear on the fabric caused by the four-piece snap fastener. On the other hand, in the actual production process, due to the operation of equipment and workers, etc., the size of the splayed and riveted end of the solid metal pin formed by stamping is inconsistent. If the splayed and riveted end is too small, the solid metal pin may disengage from the limiting hole easily. If the splayed and riveted end is too large, the head cannot be pressed into the trough. The male fastener and the female fastener cannot be fastened, and the appearance is affected.

### SUMMARY OF THE INVENTION

The primary object of the present invention is to overcome the above problems existing in the prior art and to provide a high-strength four-piece snap fastener that is easy to operate, The snap fastener enhances the installation stability between the four-piece snap fastener and the fabric, reduces the wear on the fabric, and improves the fastening effect.

In order to achieve the above technical purpose and the above technical effect, the present invention is realized by the following technical solutions:

A four-piece snap fastener comprises a male fastener and a female fastener. The male fastener is composed of a first cap and a stud. The female fastener is composed of a second cap and a socket. The first cap and the second cap each have a pin at a central portion thereof. The stud and the socket each have a recess at a central portion of a rear side thereof. The pin is fixedly connected to the recess.

Preferably, the pin is a solid metal pin. The solid metal pin has a pointed end that is fixedly connected to the recess.

Preferably, the pin is fixedly connected to the recess by splaying and riveting the pointed end.

Preferably, the stud and the socket each have a dot-like protrusion at a central portion of a front side thereof.

Preferably, a central portion of a front side of the stud is provided with a head. A central portion of a front side of the socket is provided with a trough. The head is movably connected to the trough.

Preferably, the head has an annular shape. A circumferential portion of trough is formed with a snap ring groove. A snap ring is provided in the snap ring groove. The head is movably connected to the trough through the snap spring.

Preferably, the head is shaped like a sphere. An edge portion of the socket is bent toward the rear side of the socket to form a flange. The trough is a deep trough that is recessed toward the rear side of the socket. A spring clip is disposed between the flange and the trough. Two side walls of the trough are formed with strip-shaped grooves. The spring clip extends into an inside of the trough through the strip-shaped grooves. The head is movably connected to the trough through the spring clip.

The beneficial effects of the present invention are described below:
1. Through the recess provided at the central portion of the rear side of the stud and the socket, the pin is fixedly connected to the recess by splaying and riveting the pointed end.
2. The preset recess limits the size of the splay of the riveted end of the pin, ensures the uniform appearance in use, enhances the stability of the four-piece snap fastener on the fabric, and improves the engagement of the male fastener and the female fastener.

Of course, any product of the present invention does not necessarily need to achieve all of the above advantages at the same time

### BRIEF DESCRIPTION OF THE DRAWINGS

The technical solution in the embodiments of the present invention will be described in detail below in conjunction with the accompanying drawings. It will be apparent that the described embodiments are merely part of the embodiments of the present invention and not all embodiments. For those skilled in the art, other embodiments may be obtained based on the embodiments of the present invention under the premise of not paying creative work, without departing from the scope of the present invention.
FIG. 1 is an exploded view in accordance with a first embodiment of the present invention;
FIG. 2 is a perspective view showing the front side of the stud in accordance with the first embodiment of the present invention;
FIG. 3 is a perspective view showing the rear side of the socket in accordance with the first embodiment of the present invention;
FIG. 4 is an exploded view in accordance with a second embodiment of the present invention;
FIG. 5 is a perspective view showing the front side of the stud in accordance with the second embodiment of the present invention; and
FIG. 6 is a perspective view showing the rear side of the socket in accordance with the second embodiment of the present invention.

### DETAILED DESCRIPTION OF THE PREFERRED EMBODIMENTS

To make the technical objective, solutions and effect of the present application be understood more clearly, now the specific implementation of the present application is described in detail with reference to the accompanying drawings and embodiments. It should be understood that the specific implementations described hereof are intended to be exemplary not to be limiting.

### First embodiment

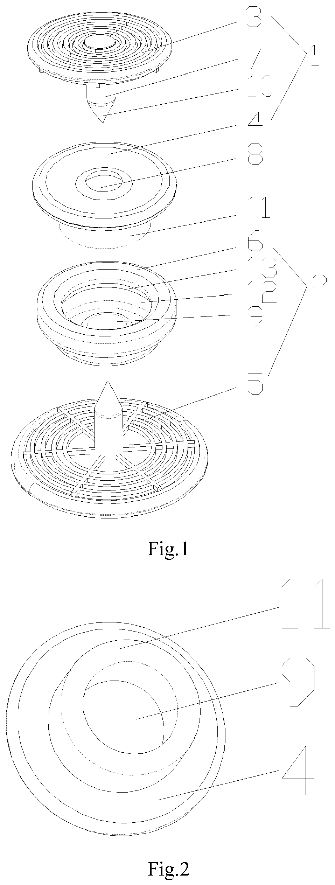

Referring to FIGS. 1-3, this embodiment is a high-strength four-piece snap fastener that is easy to operate, comprising a male fastener 1 and a female fastener 2. The male fastener 1 is composed of a first cap 3 and a stud 4. The female fastener 2 is composed of a second cap 5 and a socket 6. The first cap 3 and the second cap 5 each have a pin 7 at a central portion thereof. The stud 4 and the socket 6 each have a recess 8 at a central portion of a rear side thereof. The stud 4 and the socket 6 each have a dot-like protrusion 9 at a central portion of a front side thereof. The dot-like protrusion 9 is formed by recessing the bottom of the recess 8 toward the front side. The pin 7 is fixedly connected to the recess 8.

The pin 7 is a solid metal pin. The solid metal pin has a pointed end 10 that is fixedly connected to the recess 8. The pin 7 is fixedly connected to the recess 8 by splaying and riveting the pointed end 10. Through the above arrangement, the wear on the fabric caused by the four-piece snap fastener can be reduced when the pointed end 10 of the pin 7 pierces through the fabric and extends into the recess 8. Moreover, the preset recess 8 limits the size of the splay of the riveted end of the pin 7, ensures the uniform appearance in use, enhances the stability of the four-piece snap fastener on the fabric, and improves the engagement of the male fastener 1 and the female fastener 2.

The central portion of the front side of the stud 4 is provided with a head 11. The central portion of the front side of the socket 6 is provided with a trough 12. The head 11 is movably connected to the trough 12. The head 11 has an annular shape. A circumferential portion of trough 12 is formed with a snap ring groove 13. A snap ring is provided in the snap ring groove 13. The snap ring is a non-closed ring with elasticity. The head 11 is movably connected to the trough 12 through the snap spring.

A specific application of this embodiment is described hereinafter. When in use, firstly, the pin 7 provided on the first cap 3 pierces through the lower lappet, and then is inserted into the recess 8 provided on the rear side of the stud 4. The stud 4 and the first cap 3 are pressed by a stamping die, so that the pointed end 10 of the pin 7 placed in the recess 8 is compressed and deformed, and the riveting connection of the stud 4 and the first cap 3 is completed. The male fastener 1 is mounted and fixed to the lower lappet. Secondly, the pin 7 provided on the second cap 5 pierces through the upper lappet, and then is inserted into the recess 8 provided on the rear side of the socket 6. The socket 6 and the second cap 5 are pressed by a stamping die, so that the pointed end 10 of the pin 7 placed in the recess 8 is compressed and deformed, and the riveting connection of the socket 6 and the second cap 5 is completed. The female fastener 2 is mounted and fixed to the upper lappet. Thirdly, the head 11 is pressed into the trough 12. The head 11 is clamped by the elastic returning action of the snap ring to realize the movable connection of the male fastener 1 and the female fastener 2. The whole implementation process greatly simplifies the installation and fixing process of the four-piece snap fastener, improves the convenience of the installation operation, improves the production efficiency, enhances the connection strength, and reduces the production cost.

### Second Embodiment

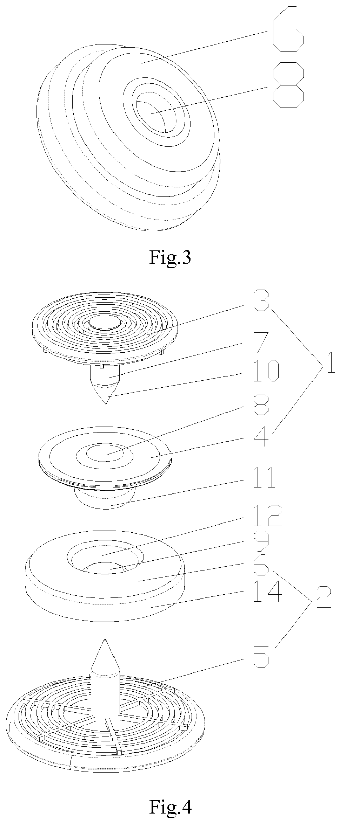

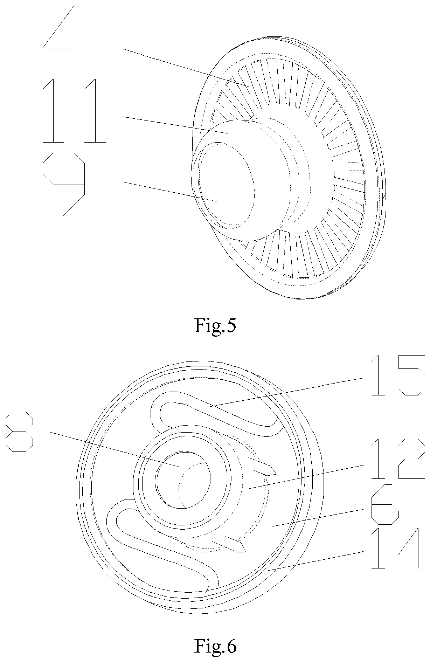

Referring to FIGS. 4-6, the second embodiment is substantially similar to the first embodiment with the exceptions described hereinafter. In the second embodiment, the head 11 is shaped like a sphere. An edge portion of the socket 6 is bent toward the rear side of the socket 6 to form a flange 14. The trough 12 is a deep trough that is recessed toward the rear side of the socket 6. A spring clip 15 is disposed between the flange 14 and the trough 12. The spring clip 15 is a U-shaped ring with elasticity. Two sides of the spring clip 15 are abutted against the flange 14 and the trough 12, respectively. Two side walls of the trough 12 are formed with strip-shaped grooves. The spring clip 15 extends into the inside of the trough 12 through the strip-shaped grooves. The head 11 is movably connected to the trough 12 through the spring clip 15. The head 11 is pressed into the trough 12. The head 11 is clamped tightly by the elastic returning action of the spring clip 15, thereby realizing the movable connection of the male fastener 1 and the female fastener 2.

In the description of this specification, the description of the terms, such as "one embodiment", "example", "specific example" and the like, means that the specific characteristics, structures, materials or features described in conjunction with the embodiments or examples are included in at least one of the embodiments or examples of the present invention. In this specification, the schematic description of the above terms does not necessarily refer to the same embodiment or example. Furthermore, the specific characteristics, structures, materials or features described may be combined in a suitable manner in any one or more embodiments or examples.

Although particular embodiments of the present invention have been described portioned in detail for purposes of illustration, various modifications and enhancements may be made without departing from the spirit and scope of the present invention. Accordingly, the present invention is not to be limited except as by the appended claims.

## Claims

1. A four-piece snap fastener, comprising a male fastener (1) and a female fastener (2), **characterized by**: the male fastener (1) being composed of a first cap (3) and a stud (4), the female fastener (2) being composed of a second cap (5) and a socket (6), the first cap (3) and the second cap (5) each having a pin (7) at a central portion thereof, the stud (4) and the socket (6) each having a recess (8) at a central portion of a rear side thereof, the pin (7) being fixedly connected to the recess (8).

2. The four-piece snap fastener as claimed in claim 1, wherein the pin (7) is a solid metal pin, and the solid metal pin has a pointed end (10) that is fixedly connected to the recess (8).

3. The four-piece snap fastener as claimed in claim 2, wherein the pin (7) is fixedly connected to the recess (8) by splaying and riveting the pointed end (10).

4. The four-piece snap fastener as claimed in any of the claims 1 to 3, wherein the stud (4) and the socket (6) each have a dot-like protrusion (9) at a central portion of a front side thereof.

5. The four-piece snap fastener as claimed in any of the claims 1 to 4, wherein a central portion of a front side of the stud (4) is provided with a head (11), a central portion of a front side of the socket (6) is provided with a trough (12), and the head (11) is movably connected to the trough (12).

6. The four-piece snap fastener as claimed in claim 5, wherein the head (11) has an annular shape, a circumferential portion of trough (12) is formed with a snap ring groove (13), a snap ring is provided in the snap ring groove (13), and the head (11) is movably connected to the trough (12) through the snap spring.

7. The four-piece snap fastener as claimed in claim 5 or 6, wherein the head (11) is shaped like a sphere, an edge portion of the socket (6) is bent toward the rear side of the socket (6) to form a flange (14), the trough (12) is a deep trough that is recessed toward the rear side of the socket (6), a spring clip (15) is disposed between the flange (14) and the trough (12), two side walls of the trough (12) are formed with strip-shaped grooves, the spring clip (15) extends into an inside of the trough (2) through the strip-shaped grooves, and the head (11) is movably connected to the trough (12) through the spring clip (15).
